# EUROPEAN PATENT APPLICATION

(11) **EP 2 418 819 A1**
(43) Date of publication of application: **15.02.2012**
(21) Application number: 10774522.6
(22) Date of filing: 06.05.2010
(51) Int. Cl.: H04L 29/06

(54) **DEVICE AND METHOD FOR PREVENTING INTERNET PROTOCOL VERSION 6 (IPV6) ADDRESS BEING FRAUDULENTLY ATTACKED**

(30) Priority: 11.05.2009 CN 200910107259
(71) Applicant: ZTE Corporation, Shenzhen, Guangdong 518057 (CN)
(72) Inventor: QIN, Chao, Shenzhen Guangdong 518057 (CN); YUAN, Liquan, Shenzhen Guangdong 518057 (CN)
(74) Representative: Manitz, Finsterwald & Partner GbR
(86) International application number: PCT/CN2010/072485
(87) International publication number: WO 2010/130181

(57) **Abstract**

A device and method for preventing Internet Protocol version 6 (IPv6) address being fraudulently attacked are disclosed in present invention, and the method comprises: detecting a Neighbor Solicitation (NS) data packet; judging whether the source address of the data packet is an unspecified address or not; if yes, checking the IPv6 address in the Target Address field and judging whether there is a corresponding binding table item or not; otherwise, collecting the correlative information and creating a binding table item corresponding to the IPv6 address; and constituting a data flow forwarding and control strategy according to the data in the binding table item, and applying the strategy to the data flow forwarding and control. The present invention solves the problem that the address is fraudulently attacked in the IPv6 network in which addresses are assigns based on various address assignment mechanisms.

## Description

### Technical Field

The present invention relates to the field of network communication security, and more especially, to a device and method for preventing internet protocol version 6 (IPv6) address being fraudulently attacked.

### Background of the Related Art

With the high speed development and rapid scale expansion of the Internet, the existing Internet Protocol version 4 (IPv4) faces a lot of problems in expansibility, for example, the address space is seriously short and is generally facing depletion, which need to be solved urgently. Therefore, some short-term schemes for delaying the address consumption are now being implemented; meanwhile, some long-term solution schemes such as the IPv6 technology are developed progressively.

With the progressive deployment and commercialization of the IPv6 network, in some fields and application scenarios such as the broadband access network, the data bone network and the telecom service bearer network, IPv6 exposes a variety of security issues similar to those in the IPv4. One of the common security issues is that the addresses are easily fraudulently attacked.

To date, the method for preventing the address being fraudulently attacked in the IPv6 network is mainly based on the IP source guard of the dynamic host configuration protocol (DHCP) snooping. Access equipments such as the switch, access point, digital subscriber line access multiplexer (DSLAM) create the DHCP Snooping bonding table by snooping the DHCP message, wherein, the message comprises the information such as user's media access control (MAC) address, IP address, rental period, VLAN-ID (virtual LAN identifier) and port , so as to perform source address guard. The abovementioned existing source guard method can only be used in the IP address in which addresses are assigned based on the DHCP. While for other IPv6 networks assigning the addresses based on the stateless auto-configuration or static configuration, there are no effective solutions.

### Content of the Invention

According to the problem that the addresses are easily being fraudulently attacked in the IPv6 networks in which addresses are assigned based on DHCP, Stateless Auto-configuration or static configuration, the present invention provides a universal device and method for preventing the IPv6 address being fraudulently attacked.

The device for preventing the IPv6 address being fraudulently attacked in accordance with the present invention comprises:

A neighbor solicitation (NS) packet processing module, a binding processing module and a flow control strategy module;

Wherein, the NS packet processing module is configured to receive NS packet and form a judgment on the NS packet's source address, and if the source address is an unspecified address, send the received NS packets to the binding processing module to process; if the source address is not an unspecified address, neglect the NS packet.

The binding processing module is configured to check the IPv6 address in the NS packet Target Address field, and judge whether the database of the binding processing module has a binding table item corresponding to the IPv6 address or not, and if no, then collect the relevant information of the IPv6 address and create a new binding table item corresponding to the IPv6 address; otherwise, then neglect this NS packet.

The flow control strategy module is configured to configure the data flow control strategy according to the data in the binding processing module and apply the strategy to the forwarding and controlling of the data flow.

The aforementioned device may also comprises: an address validity checking module, which is configured to check the IPv6 address in the Target Address field after the NS packet processing module judges that the packet source address is an unspecified address, and judge whether the IPv6 address is valid or not, and if yes, send the NS packet to the binding processing module; otherwise, neglect the NS packet. The function of the address validity checking module can be enabled or disabled according to specific implementations.

To achieve the abovementioned purpose, according to another aspect of the present invention, a method for preventing the IPv6 address being fraudulently attacked is provided.

The method for preventing the IPv6 address being fraudulently attacked in accordance with the present invention comprises:

The NS packet processing module receives a NS packet sent by a node, checks the source address field in the NS packet, and judges whether the source address is an unspecified address or not, and if yes, sends the NS packet to the binding processing module to process; otherwise, neglects the NS packet.

The binding processing module reads out the IPv6 address in the Target Address field in the NS packet and judges whether the database of the binding processing module has a binding table item corresponding to the IPv6 address or not and if no, then collects the relevant information of the IPv6 address and creates a new binding table item corresponding to the IPv6 address; otherwise, neglects the NS packet.

The flow control strategy module configures the data flow control strategy based on the data of the binding processing module and applies the strategy to the forwarding and controlling of the data flow;

The abovementioned method might also comprises: after the NS packet processing module judges that the packet source address is an unspecified address, if the address validity checking function is enabled, the address validity checking module checks the IPv6 address in the Target Address field in the NS packet and judges whether the IPv6 address is valid or not, and if yes, sends the NS packet to the binding processing module to process; otherwise, neglects the NS packet;

With the present invention, the NS packet is detected to create the corresponding binding table item, and thus constitute a data flow forwarding and controlling strategy to address the problem that the addresses in the IPv6 network in which the addresses are assigned based on DHCP, Stateless Auto-configuration or static configuration etc. are easily fraudulently attacked, thus to guarantee the security of the IPv6 network communications.

### Brief Description of Drawings

The accompanying drawings described herein are provided to further understand the present invention and form a part of this application; the illustrative embodiments of the present invention and their descriptions are used to explain the present invention rather than used to restrict the present invention. In the accompanying drawings:
FIG. 1: a block diagram of the device for preventing IPv6 address being fraudulently attacked;
FIG. 2: a block diagram of the device for preventing IPv6 address being fraudulently attacked after the address validity checking function is enabled;
FIG. 3: a flow chart of the method for preventing IPv6 address being fraudulently attacked;
FIG. 4: a detailed flow chart of the method for preventing IPv6 address being fraudulently attacked.

### Preferred Embodiments of the Present Invention

### Features Overview

Considering that the existing IP Source Guard based on DHCP Snooping can only be used in IPv6 network in which the addresses are assigned based on DHCP, the embodiment of the present invention provides a generally applicable scheme for preventing the IPv6 address being fraudulently attacked. This method creates the corresponding binding table item by detecting the NS packets, and constitutes a data flow forwarding and controlling strategy thereby, thus to improve the security feature of IPv6 networks.

It should be noted that, in the case of no conflict, the embodiments in this application and the features of the embodiments can be combined. In the following, the present invention will be illustrated in detail with combination of the embodiments and with reference to the accompanying drawings.

### Device embodiment

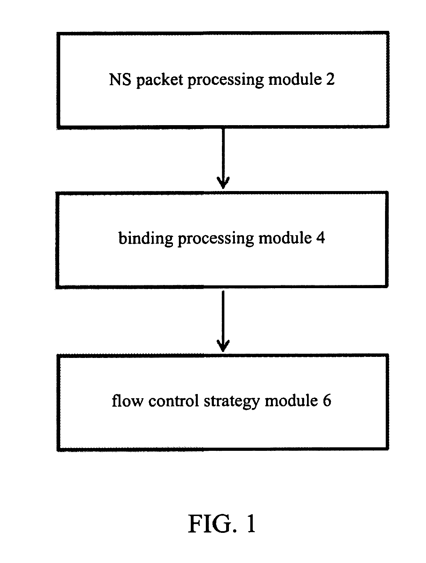

According to the embodiments of the present invention, a device for preventing IPv6 address being fraudulently attacked is provided to implement the abovementioned method for preventing IPv6 address being fraudulently attacked. FIG. 1 is a block diagram of the device for preventing the IPv6 address being fraudulently attacked in accordance with an embodiment of the present invention. As shown in FIG. 1, the device comprises a NS packet processing module 2, a binding processing module 4, and a flow control strategy module 6, the abovementioned structure will be described in detail in the following.

The NS packet processing module 2 is configured to receive the NS packet and judge whether the NS packet's source address is an unspecified address or not, and if no, then neglect the NS packet. The binding processing module 4 connects to the NS packet processing module 2 and is configured to check the IPv6 address in the Target Address field in the NS packet in the case that the NS packet processing module judges that the packet source address is an unspecified address, and judge whether the database of the binding processing module has a corresponding binding table item or not, and if no, then collect other relevant information and create a new binding table item corresponding to the IPv6 address; otherwise, then neglect this NS packet. The flow control strategy module 6 connects to the binding processing module 4 and is configured to configure the data flow control strategy according to the data in the binding processing module and apply the strategy to the data flow forwarding and controlling.

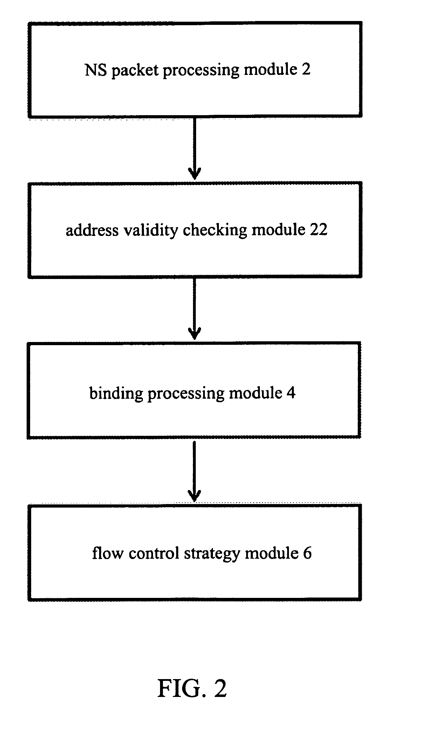

Furthermore, FIG. 2 is a block diagram of the device for preventing the IPv6 address being fraudulently attacked after the address validity checking function is enabled in accordance with an embodiment of the present invention. As shown in FIG. 2, the device comprises the NS packet processing module 2, the address validity checking module 22, the binding processing module 4, and the flow control strategy module 6. The abovementioned structure will be described in detail in the following.

The NS packet processing module 2 is configured to receive the NS packet and judge whether the NS packet's source address is an unspecified address or not, and if no, neglect the NS packet. The address validity checking module 22 connects to the NS packet processing module 2 and is configured to judge whether the IPv6 address is valid or not after the NS packet processing module judges that the packet source address is an unspecified address, and if no, neglect the NS packet. The binding processing module 4 connects to the address validity checking module 22 and is configured to check the IPv6 address in the Target Address field in the NS packet in the case that the judgment result by the address validity checking module 22 is yes, and judge whether the database of the binding processing module has a corresponding binding table item or not, and if no, then collect other relevant information and create a new binding table item corresponding to the IPv6 address; otherwise, then neglect this NS packet. The flow control strategy module 6 connects to the binding processing module 4 and is configured to configure the data flow control strategy according to the data in the binding processing module and apply the strategy to the data flow forwarding and controlling.

### Method embodiment

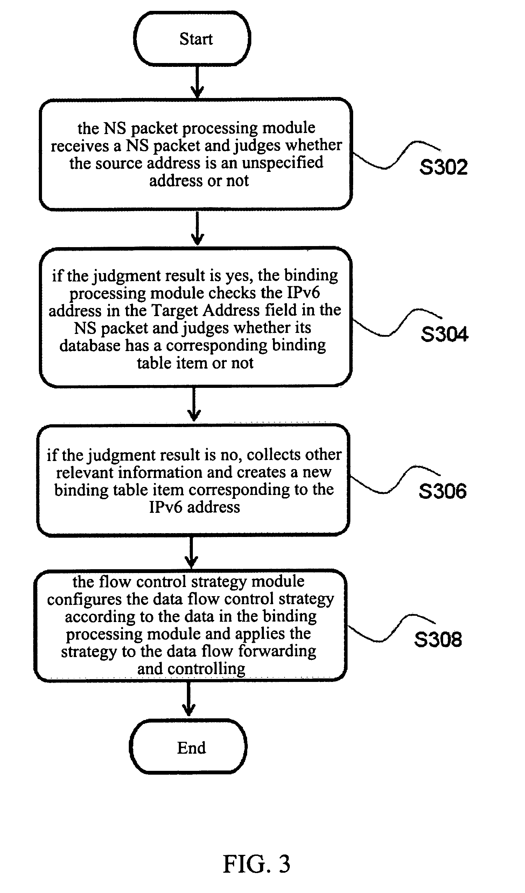

According to the embodiment of the present invention, a method for preventing the IPv6 address being fraudulently attacked is also provided, FIG. 3 is a flow chart of the method for preventing the IPv6 address being fraudulently attacked in accordance with an embodiment of the present invention, as shown in FIG. 3, the method comprises the following steps from S302 to S308:
S302, the NS packet processing module receiving a NS packet and judges whether the source address is an unspecified address or not;
S304, if yes, the binding processing module checking the IPv6 address in the Target Address field in the NS packet and judging whether its database has a corresponding binding table item or not;
S306, if no, collecting other relevant information and creating a new binding table item corresponding to the IPv6 address;
S308, the flow control strategy module configuring the data flow control strategy according to the data in the binding processing module and applying the strategy to the data flow forwarding and controlling.

It should be noted that the steps of the process shown in the drawings can be executed with computer executable instructions in a computer system, moreover, although the flow chart indicates one logical order, in some cases, the steps described or shown can be executed in a different order.

The implementation of an embodiment of the present invention will be described in detail in the following.

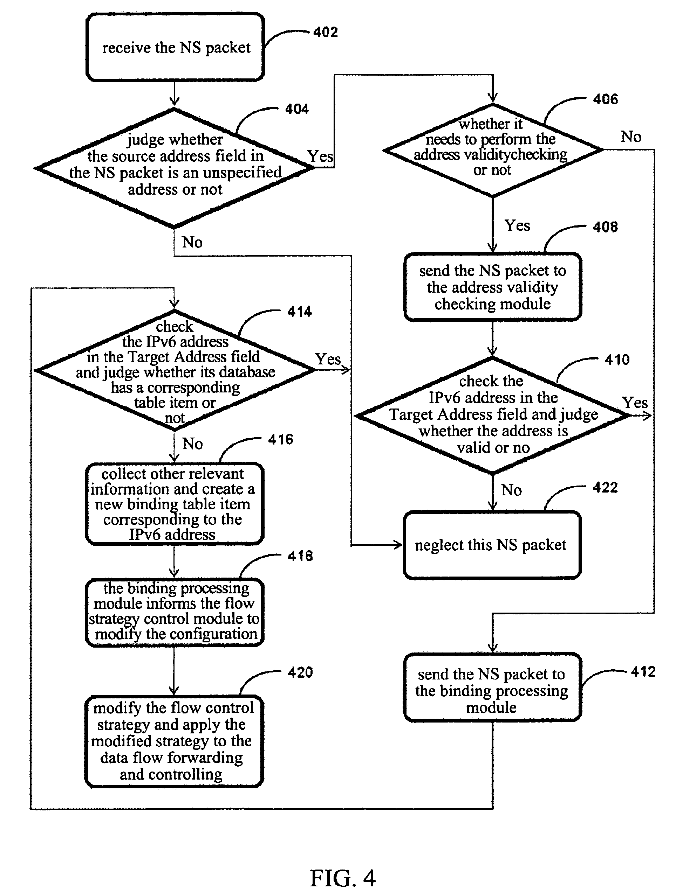

FIG. 4 is a detailed flow chart of the method for preventing IPv6 address being fraudulently attacked in accordance with an embodiment of the present invention, as shown in FIG. 4, the process comprises the following step 402 to step 422:
Step 402: the NS packet processing module receiving the NS packet sent from the Node;
Step 404: the NS packet processing module checking and judging whether the source address field in the NS packet is an unspecified address or not, if yes, proceeding to step 406, otherwise, proceeding to step 422;
Step 406: Judging whether it needs to perform the address validity checking or not, and if yes, proceeding to step 408; otherwise, proceeding to step 412;
Step 408: the NS packet processing module sending the NS packet to the address validity checking module;
Step 410: the address validity module checking the IPv6 address in the Target Address field and judging whether the address is valid or not, if yes, proceeding to step 412; otherwise, proceeding to step 422;
Step 412: sending the NS packet to the binding processing module;
Step 414: the binding processing module checking the IPv6 address in the Target Address field and judging whether its database has a corresponding table item or not, if no, proceeding to step 416; otherwise, proceeding to step 422;
Step 416: the binding processing module collecting other relevant information, including but not limited to: source MAC address, VLAN-ID, port number, and so on, and creating a new binding table item corresponding to the IPv6 address;
Step 418: the binding processing module informing the flow strategy control module to modify the configuration, and the configuration modification might being creating, modifying, or deleting;
Step 420: the flow strategy control module modifying the flow control strategy and applying the modified strategy to the data flow forwarding and controlling, and the process ending;
Step 422: neglecting the NS packet, and the process ending;

In summary, by the abovementioned embodiment of the present invention, there is provided a function-independent and high-adaptability device and method for preventing the IPv6 address being fraudulently attacked to solve the problem that the addresses in IPv6 networks in which the address are assigned based on a variety of address assignment mechanisms are facing being fraudulently attacked, thus enhancing the flexibility of the IPv6 network design and deployment and protecting the security of network data communications.

Obviously, it can be understood by those skilled in the field that each module or step in the present invention can be fulfilled with general computation devices, the modules and steps can be integrated in a single computation device or distributed to a network consisting of multiple computation devices. Optionally, they can be implemented with executable programming code in the computation device, thus they can be stored in the storage device and executed by the computation device, alternatively, they can be made into each integrated circuit module, or some of the modules or steps are integrated into a single integrated circuit module. Thus, the present invention is not limited to any specific hardware and software combination.

The above description is only the preferred embodiment of the present invention rather than the restriction of the present invention. For those skilled in the field, the present invention can be modified or improved. Without departing from the spirit and essence of the present invention, any modification, equivalent or improvement made should belong to the scope of the claims of the present invention.

### Industrial Applicability

Compared with the prior art, the present invention detects NS packet to create the corresponding binding table item, and thus constitutes a data flow forwarding and controlling strategy to address the problem that the addresses in the IPv6 network in which the addresses are assigned based on DHCP, Stateless Auto-configuration or static configuration are easily fraudulently attacked, thus guaranteeing the security of the IPv6 network communications.

## Claims

1. A device for preventing Internet Protocol version 6 address being fraudulently attacked, comprising:
a neighbor solicitation packet processing module, which is configured to check a source address of a neighbor solicitation packet.
a binding processing module, which is configured to check the Internet Protocol version 6 address in a Target Address field in the neighbor solicitation packet, and judge whether a database of the binding processing module has a binding table item corresponding to the Internet Protocol version 6 address or not;
a flow control strategy module, which is configured to configure a data flow control strategy according to data in the binding processing module and apply the strategy to data flow forwarding and controlling.

2. The device of claim 1, wherein, the neighbor solicitation packet processing module is also configured to receive the neighbor solicitation packet and form a judgment on the source address of the received neighbor solicitation packet, and send the received neighbor solicitation packet to the binding processing module to process if it is judged that the source address is an unspecified address; neglect the received neighbor solicitation packet if it is judged that the source address is not an unspecified address.

3. The device of claim 1 or 2, wherein, the device might also comprises an address validity checking module, and the address validity checking module is configured to check validity of the Internet Protocol version 6 address in the Target Address field in the neighbor solicitation packet after the neighbor solicitation packet processing module judges that the source address of the neighbor solicitation packet is an unspecified address.

4. The device of claim 3, wherein, the address validity checking module is configured to:
send the neighbor solicitation packet to the binding processing module if it is judged that the Internet Protocol version 6 address is valid; neglect the neighbor solicitation packet if it is judged that the Internet Protocol version 6 address is not valid.

5. The device of claim 1 or 2, wherein, the binding processing module is also configured to create a new binding table item if it is judged that the database of the binding processing module does not have the binding table item corresponding to the Internet Protocol version 6; neglect the neighbor solicitation packet if it is judged that the database of the binding processing module has the binding table item corresponding to the Internet Protocol version 6.

6. A method for preventing Internet Protocol version 6 address being fraudulently attacked, comprising:
a neighbor solicitation packet processing module receiving a neighbor solicitation packet sent by a node, checking a source address field in the neighbor solicitation packet, and judging whether the source address is an unspecified address or not, and if yes, sending the neighbor solicitation packet to a binding processing module to process;
the binding processing module checking the Internet Protocol version 6 address in a Target Address field in the neighbor solicitation packet and judging whether a database of the binding processing module has a binding table item corresponding to the Internet Protocol version 6 address or not, and if a result of the judgment is no, then collecting relevant information of the Internet Protocol version 6 address and creating a new binding table item corresponding to the Internet Protocol version 6 address;
a flow control strategy module configuring a data flow control strategy based on data of the binding processing module and applying the strategy to data flow forwarding and controlling.

7. The method of claim 6, also comprising: after the neighbor solicitation packet processing module judges that the source address is an unspecified address, executing address validity checking.

8. The method of claim 7, wherein, in the step of executing address validity checking, if the neighbor solicitation packet processing module judges that the Internet Protocol version 6 address in the Target Address field is valid, the neighbor solicitation packet is sent to the binding processing module; if the neighbor solicitation packet processing module judges that the Internet Protocol version 6 address in the Target Address field is not valid, the neighbor solicitation packet is neglected.

9. The method of claim 6, also comprising: if the neighbor solicitation packet processing module judges that the source address field in the neighbor solicitation packet is not an unspecified address, neglecting the neighbor solicitation packet.

10. The method of claim 6, also comprising: if the binding processing module judges that the database of the binding processing module has a binding table item corresponding to said Internet Protocol version 6 address, neglecting the neighbor solicitation packet.
